# EUROPEAN PATENT SPECIFICATION

(11) **EP 2 929 405 B1**
(45) Date of publication and mention of the grant of the patent: **06.11.2019**
(21) Application number: 13812293.2
(22) Date of filing: 03.12.2013
(51) Int. Cl.: G06F 1/16, H04M 1/05, G02B 27/01

(54) **SPRING-LOADED SUPPORTS FOR HEAD SET COMPUTER**
GEFEDERTE TRÄGER FÜR HEADSET-COMPUTER
SUPPORTS À RESSORT POUR ORDINATEUR CASQUE

(30) Priority: 04.12.2012 US 201261733391 P; 08.01.2013 US 201361750266 P
(43) Date of publication of application: 14.10.2015
(73) Proprietor: Kopin Corporation, Westborough, MA 01581 (US)
(72) Inventor: POMBO, Stephen, A., Cambell, CA 95008 (US); JACOBSEN, Jeffrey, J., Hollister, CA 95023 (US); KUECHLE, Temujin, W., Santa Cruz, CA 95060 (US); HEBERT, Raphael, Santa Cruz, CA 95062 (US); DIEPERSLOOT, David, Scotts Valley, CA 95066 (US)
(74) Representative: Appleyard Lees IP LLP
(86) International application number: PCT/US2013/072867
(87) International publication number: WO 2014/089074

(56) References cited:
- EP-A2- 0 531 645
- EP-A2- 0 531 645
- WO-A1-95/11473
- WO-A1-95/11473
- JP-A- H0 622 246
- JP-A- H0 622 246
- JP-A- 2009 111 512
- JP-A- 2009 111 512
- US-A1- 2001 047 693
- US-A1- 2001 047 693
- US-A1- 2009 085 833
- US-A1- 2009 154 719
- US-A1- 2009 243 970
- US-A1- 2011 089 207
- US-B1- 6 771 424
- US-B1- 6 771 424

## Description

### BACKGROUND OF THE INVENTION

A head mounted computer includes a display and is mounted to a user's head to enable the user to view the display. The display shows images to the user which can be generated by, for example, the head mounted computer, anther computer, or a remote device. The user can control the head mounted computer or another remote device, which in turn affects the images shown on the display.

US 2011/089207 is background art and discloses a mounting device couplable to a human head. WO 95/11473 is background art and discloses a head-mounted display system.

### SUMMARY OF THE INVENTION

The invention is set out in the independent claims 1 and 11. Preferred embodiments are defined in the dependent claims.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 is a diagram illustrating a top-down view of an example head worn computer in a partially folded state.
FIG. 2 is a diagram illustrating an example embodiment of a head worn computer configured to the head of a user.
FIG. 3 is a diagram illustrating a cross-section of an example embodiment of a head worn computer.
FIG. 4A is a diagram illustrating an example embodiment of springs that may be located within the housing of the head worn computer.
FIG. 4B is a diagram illustrating an example embodiment of springs in isolation.
FIG. 5 is an illustration of an example embodiment of the head worn computer worn on the head of a user.
FIGs. 6A-6B are block diagrams illustrating electrical circuits employing near field communication to transfer data between electronics modules of a head worn computer.
FIGs. 7A-7C are block diagrams illustrating example arrangements of PCBs equipped with NFC modules.

### DETAILED DESCRIPTION OF THE INVENTION

A description of example embodiments of the invention follows.

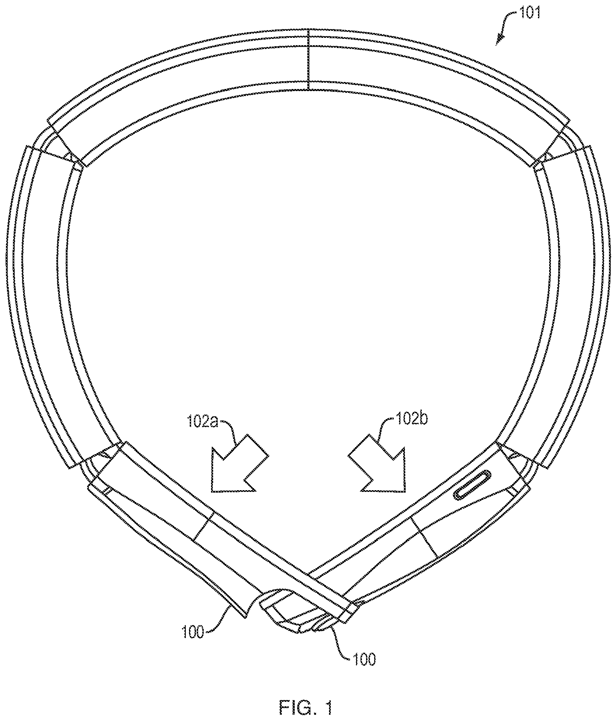

FIG. 1 is a diagram illustrating a top-down view of an example head worn computer in a partially folded state. The head worn computer is comprised of a housing 101, which terminates in two end regions 100. The housing may be constructed of a plastic or metal material which encloses all or part of a spring. The spring provides an inward force directed towards a user's head. To open the head worn computer from its partially folded state, the user can apply a force in the direction of arrows 102a-b. In the present example embodiment, a first end 100 rests on top of a second end 100 when in a partially folded state. In another embodiment, the second end 100 may rest on top of the first end 100.

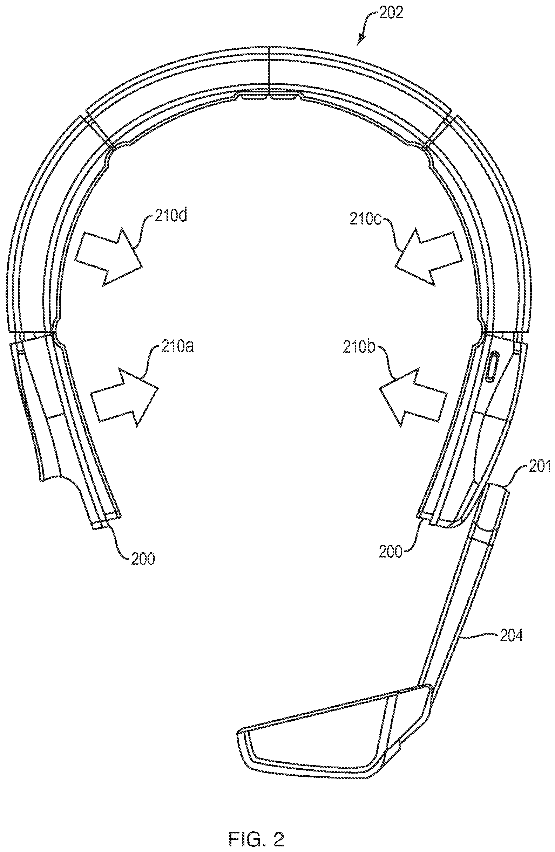

FIG. 2 is a diagram illustrating an example embodiment of a head worn computer configured to the head of a user. The housing 202 rests and remains stationary against the back of the user's head. When worn on a user's head, the springs exert an inward force in a direction indicated by arrows 210a-d. The inward force secures the computer to the user's head. Along the inside surface of the housing adjacent to the user's head while the user is wearing the head worn computer, padding may be attached to provide comfort to the user. One or more speakers may be attached to the housing, for example, along the outside surface of the housing. The speakers may rotate up to 220°. Providing and enabling more than one speaker may provide the user with stereo audio.

Further, one or both end regions 200 may include a mount 201. The mount 201 may be used to attach accessories, such as a camera, a microphone, a sensor, an illumination device, or a display. Further, the mounts on each of the end regions can also provide a setup for a strap mount, which can secure the headset computer to the user's head in a more effective manner.

The mount 201 may also include at least one pivot and/or joint to allow the user to adjust the angle or location of the accessory attached to the mount. The head worn computer is mounted with a display 203 attached to an arm 204. The display, as well as other accessories, can flip 180°. Flipping the display or accessory allows the user to flip the entire head worn computer and position an accessory on the opposite side of the user's head. This, for example, provides the user with the freedom to shift the display from left eye to right eye, or vice versa, without the need to disconnect and reconnect the display to the opposite mount.

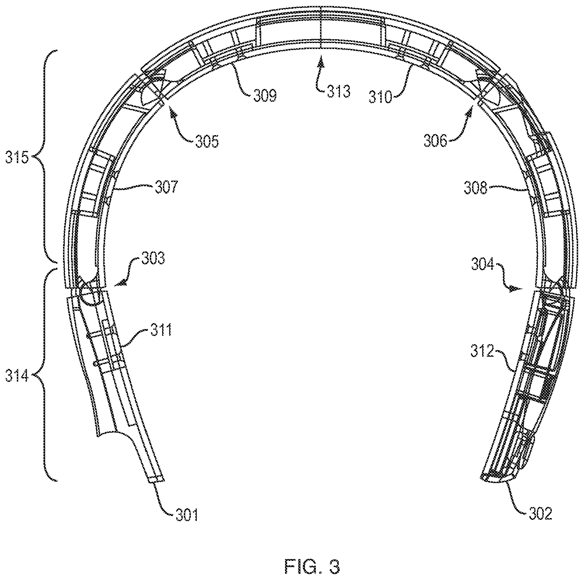

FIG. 3 is a diagram illustrating a cross-section of an example embodiment of a head worn computer. The head worn computer in FIG. 3 includes flexible regions 303-305, stiff regions 307-312, and two end regions 301-302. Each flexible region 303-305 includes a spring. The springs of each flexible region 303-305 produce an inward force directed towards a user's head. The head worn computer may employ multiple springs or it may use one spring to provide a desired amount of inward tension/force.

A plurality of regions may include at least one flexible region and/or at least one stiff region, or, a plurality of regions may include multiple flexible regions and/or multiple stiff regions. A first of the plurality of regions 314 and a second of the plurality of regions 315 can each include at least one flexible region and at least one stiff region.

Further, the head worn computer includes two sets of flexible regions. A first set of flexible regions 305 and 306 are one spring length away from the center of the housing 313. As a result, the first set of flexible regions 305 and 306 apply a large force to the head. This force allows the head worn computer to be secured to the user's head. The second set of flexible regions 303 and 304, however, are one spring length away from the first set of flexible regions 305 and 306, and two spring lengths away from center of the housing 313. The second set of flexible regions 303 and 304 exerts less force than a single spring in isolation because the second set is two spring lengths from the center of the housing 313. The second set of flexible regions 303 and 304, therefore, apply less force than the first set of flexible regions 305 and 306. In this example embodiment, when worn by the user, the end regions 301 and 302 rest near the front of the user's head, above the ear. The second set of flexible regions 303 and 304 apply less force than the first flexible regions 305 and 306 to prevent discomfort to the user.

Further, in an example embodiment, a near field communication (NFC) link may be installed in one of the plurality of regions. For example, within the first of the regions 314, a central processing printed circuit board (CPUPCB) including a central processing unit (CPU) coupled to a first near field communications (NFC) module may be installed. Adjacent to, or otherwise within range of, the first of the regions 314, a second of the regions 315 may have an auxiliary printed circuit board (AUXPCB) including one or more auxiliary modules operatively coupled to a second NFC module. The first NFC module and the second NFC module may be configured to establish an NFC link. Within each of the remaining pluralities of regions, a NFC module and corresponding electronics modules (e.g. CPUPCB, CPU, or AUXPCB) may be installed. Each NFC module in each region may be configured to establish an NFC link.

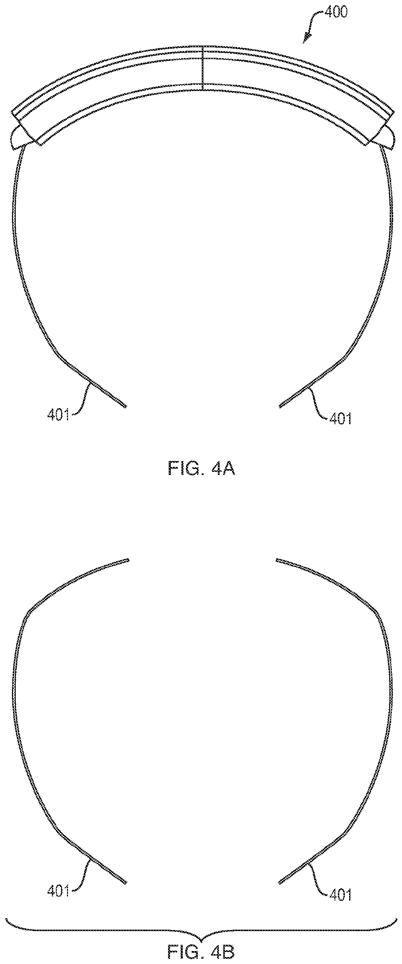

FIG. 4A is a diagram illustrating an example embodiment of springs 401 that may be located within the housing 400 of the head worn computer. In FIG. 4A, the springs401 are shown removed from the regions of the housing that contain the springs 401.

FIG. 4B is a diagram illustrating an example embodiment of springs 401 in isolation. In FIG. 4B, the springs 401 are shown removed from the housing entirely.

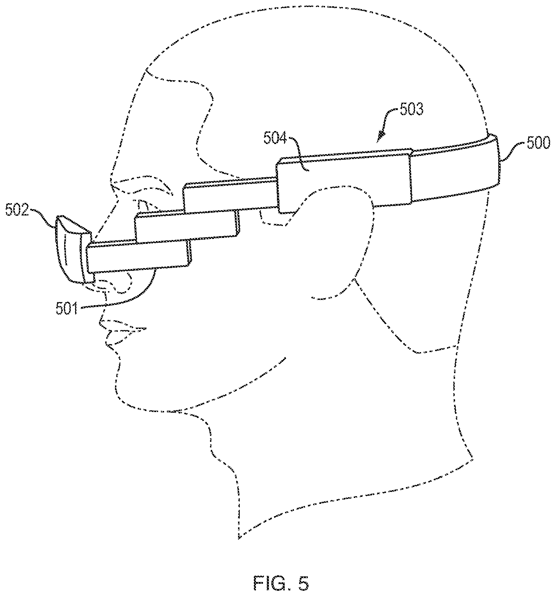

FIG. 5 is an illustration of an example embodiment of the head worn computer worn on the head of a user. The housing 500 rests on the back of the user's head and remains stationary. End region 503 rests above the user's ear, close to the temple at the front of the user's head. In an example embodiment, the end region includes a mount 504. A display 501 may be attached to the mount 504. The display 501 can be positioned directly in front of the user's eye 502.

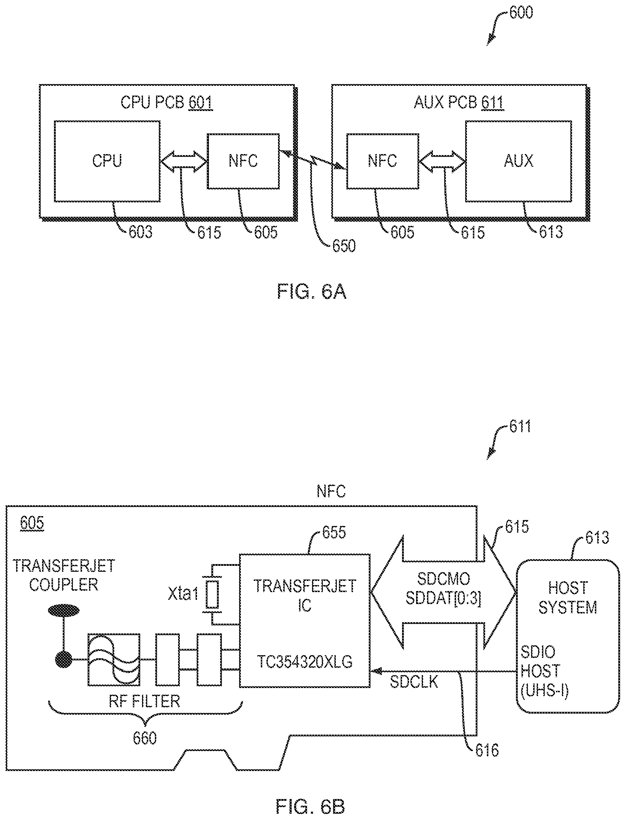

FIGs. 6A and 6B are block diagrams 600 and 611 of electrical circuits employing near field communication to transfer data between electronics modules of a head worn computer.

Near field communications (NFC) is a set of standards for establishing radio communications between devices by touching the devices or bringing them into close proximity, usually no more than a few centimeters. Smartphones and similar devices currently employ NFC technology. Present applications include contactless transactions, data exchange, and simplified setup of more complex communications, such as Wi-Fi. Communication is also possible between an NFC device and an unpowered NFC chip, called a "tag".

Recent developments in NFC technology have enabled near-field high speed data transfer, including, for example, a "near-field high speed data transfer technology" (e.g., 375Mb/sec.). Such NFC technology can be used for convenience in mobile devices; consumers find such high speed downloads or data transfer rates useful for transferring files, particularly for large files, such as movies. The Toshiba Transfer Jet is a NFC technology that provides wireless near-field high speed data transfer, can operate up to a distance of 3.5 centimeters, and has a near-field radiated power dissipation level that is similar to very low power near-field Bluetooth power levels. The Transfer Jet is available from Toshiba America Electronic Components, Inc., 19900 MacArthur Boulevard, Suite 400, Irvine, California.

NFC modules can be employed as an interface to provide near-field high speed wireless data transfer to interface between electronics modules or printed circuit boards (PCBs) (also referred to herein as printed circuit board assemblies (PCBAs)). In general, PCBs are used to mechanically support and electrically connect electronic components using conductive pathways, tracks, or signal traces etched from copper sheets laminated onto a non-conductive substrate. Multiple PCBs are typically interconnected using large multi-wire busses or, sometimes, vias are used for "stacked" configurations or for multi-layer boards.

The PCBs of the head worn computers can be equipped with NFC modules. The NFC modules can replace the large multi-wire busses and vias used to interface between multiple PCBs. The NFC module equipped PCBs can be arranged in a stacked configuration (e.g., the PCB connected in a parallel configuration) or placed end-to-end (e.g., the PCBs connected in a series configuration). NFC modules allow the PCBAs to be placed in a thinner or lower profile stack because the volume needed to fit large multi-pin PCBA to PCBA connectors is no longer required.

In either arrangement of PCBs is used, a first NFC module is located within a NFC range of a second NFC module to enable an interfacing wireless communications link between the two NFC modules. An example NFC range, such as the Transfer Jet, is up to 3.5 centimeters, although the data transmit and reception range can be controlled by system software. Control of operating NFC ranges may be based on particular use and application to optimize a feature of system performance, such as transfer rate or battery life.

For embodiments of a head worn computer that use two or more NFC interfaces, when the NFC module is used for high speed data transfer between the head worn computer and another device, such as a Smartphone or another head worn computer, application software (or operating system instructions) can select a single or multiple NFC modules as the data transfer point to interface with the other device.

For practical purposes, PCBAs can be sealed to the outside having only a power and/or ground external connection. By equipping individual head down computer PCBAs with NFC modules, the PCBAs (including the NFC modules) can be more easily hermetically sealed, because there are large number of external connection points of the multi-wire busses and vias have been eliminated. Thus, higher levels of system reliability and system life-span are possible because exposure to dust and moisture are greatly reduced.

NFC modules allow the PCBAs to move or flex within the physical constraints of a system architecture or industrial design free from the possibility of physical damage associated with the multi-wire busses, flex circuit interfaces, or connectors becoming loose or making intermittent contact during vibration or other PCBA to PCBA movement.

Using near field wireless high speed data transfer technology can eliminate large multiple pin connectors on two or more adjoining PCBAs, as well as any high speed multiple wire data bus or flex circuit interfaces. Eliminating the sharp right angle connection of PCBAs to PCBAs and the speed multi-wire bus or cables from PCBA to PCBA can improve and lower high speed system EMI and regional RF emission certifications.

Thus, use of PCBs equipped with NFC modules may allow head worn computers to employ hinges, system housing flex points, and flexible or stiff regions in its industrial design and be freed from the problems of passing large multi-wire busses or flex circuits interfaces through or about the hinges or flex points.

FIG 6A is block diagram of circuit 600, an example embedment of PCBs equipped with NFC modules arranged to be within the near field range of each other and configured to establish a communications link. The circuit 600 includes a central processing unit printed circuit board assembly 601 (CPU PCB) and an auxiliary printed circuit board assembly 611 (AUX PCB). CPU PCB 601 includes a central processing unit 603 (CPU) communicatively coupled 615 to an NFC module 605. The CPU 603 can be, for example, an OMAP4430 multimedia application processor available from Texas Instruments Inc., 12500 TI Boulevard Dallas, Texas. For reasons of simplicity, details of the CPU PCB 603 have been omitted, including, but not limited to: a power companion chip, battery connector, camera connector, USB on-the-go micro-AB connector, PCB temperature sensor, display connector, debug connector, status LEDs, user switches, etc. and communications pathways, such as traces, wires, etc. As such, the CPU PCB 603 can include any or more of these details.

The AUX PCB 611 includes an auxiliary module 603 (AUX) communicatively coupled 615 to an NFC module 605. NFC modules 605 are arranged in close proximity, that is, within an operable near field range of one another.

Further, the NFC modules are configured to establish a bi-directional wireless communications link 650. Such a bi-directional wireless communications link 650 can be established using any appropriate NFC protocol and/or data exchange format. Although not shown in FIG. 6A for reasons of simplicity, the AUX PCB 611 can include multiple AUXs 613, such as an audio codec and mini-DSP module, head tracker module, micro-SD card, power regulators, GPS receivers, wireless communications modules employing protocols such as Wi-Fi, Bluetooth, etc., eMMC embedded storage. The AUX PCB 611 can not only include additional AUXs 613, such as those listed above, but also include communications pathways, such as traces, wires, etc. that enable operable coupling.

FIG. 6B is a schematic diagram of the AUX PCB 611 showing more details of the NFC module 605. The AUX PCB 611 includes the AUX module 613, operable coupling 615, and NFC module 605. The NFC module 605 can include NFC integrated circuit (NFC IC) 655 and radio frequency (RF) circuit 660.

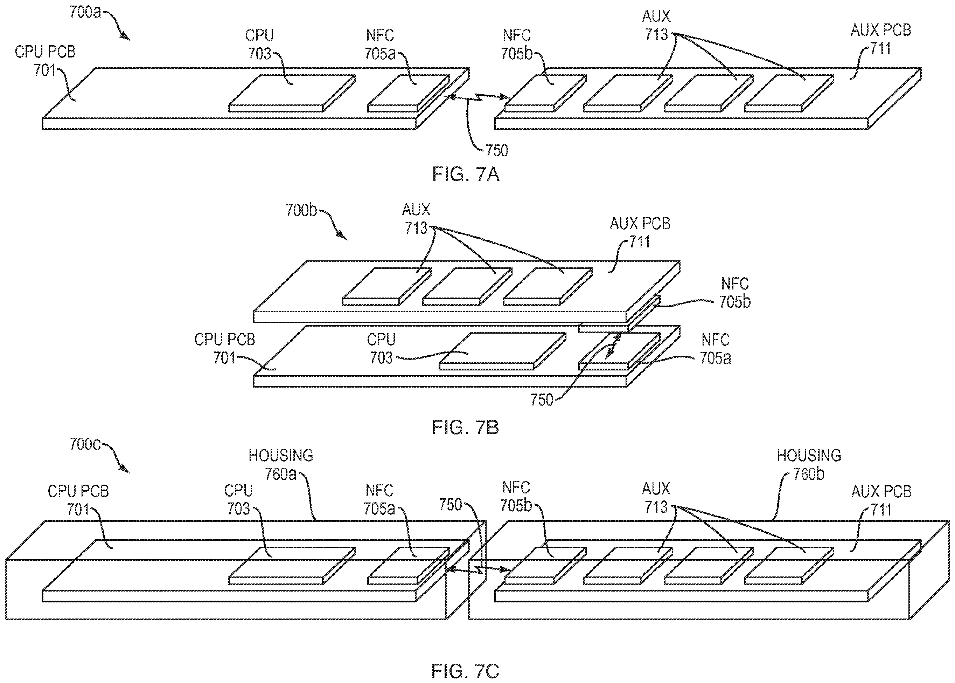

FIGs. 7A - 7C are block diagrams illustrating example arrangements of PCBs equipped with NFC modules.

FIG. 7A is a block diagram illustrating an example embodiment of a series arrangement 700a (also referred to as end-to-end) of PCBs including CPU PCB 701 and AUX PCB 711. The CPU PCB 701 includes the CPU 703 and NFC module 705a. The AUX PCB 711 includes multiple AUXs 713 and NFC module 705b. The NFC modules 705a-b are arranged to be positioned at an end of their respective PCBs. In other words, a first NFC module 705a is located at an end, near the edge of the CPU PCB 701 and a second NFC module 705b is located at an end, near an edge of the AUX PCB 711. The CPU PCB 701 and AUX PCB 711 are arranged such that the location of each respective NFC module 705a-b is located within the near field range of its respective communications link partner to enable the wireless transfer of data through communications link 750.

FIG. 7B is a block diagram illustrating an example embodiment of a parallel arrangement 700b (also referred to as stacked) of PCBs including CPU PCB 701 and AUX PCB 711. Similar to FIG. 7A, the CPU PCB 701 includes the CPU 703 and NFC module 705a, and the AUX PCB 711 includes multiple AUXs 713 and NFC module 705b. Unlike the series arrangement 700a, the in parallel arrangement 700b the NFC 705b of AUX PCB 711 is mounted on the underside so as to enable the NFC modules 705a-b to be located within the near field range of each other.

FIG. 7C is a block diagram illustrating an example embodiment of a series arrangement 700c of PCBs, including CPU PCB 701 and AUX PCB 711, that is similar to series arrangement 700a but for the CPU PCB 701 and AUX PCB 711 each being encased in a housing 760a-b, respectively. The housings 760a-b should be designed to enable the NFC modules 705a-b to be located within the near field range of each other in at least one operational position.

While this invention has been particularly shown and described with references to example embodiments thereof, it will be understood by those skilled in the art that various changes in form and details may be made therein without departing from the scope of the invention encompassed by the appended claims.

## Claims

1. A head worn computer comprising:
a housing, wherein the housing (313) includes:
a plurality of regions and further two end regions (301, 302);
wherein the head worn computer is configured to wrap around a portion of the user's head, such that the two end regions (301, 302) are located at the front of the user's head, and the two end regions (301, 302) are on opposite sides of the user's head;
wherein the housing includes at least one spring (401) configured to apply inward force to the user's head; and
the plurality of regions includes a first flexible region (305, 306) and a second flexible region (303, 304);
wherein the first flexible region (305, 306) is located between a center of the housing and a first stiff region (307, 308), said center of the housing (313) being located at the back of the user's head when the head worn computer is worn;
wherein the second flexible region (303, 304) is located between the first stiff region (307, 308) and a second stiff region (311, 312), wherein the first stiff region (307, 308) and the second stiff region (311, 312) are on a same side of the user's head; and
wherein the first flexible region (305, 306) is closer to the center of the housing (313) than the second flexible region (303, 304), and as a result is arranged to provide a greater inward force to the user's head than the second flexible region (303, 304),
wherein the housing is supported by the back of the user's head when the head worn computer is worn.

2. The head worn computer of claim 1, wherein the end regions (301, 302) are arranged to rest above the user's ears.

3. The head worn computer of any previous claim, wherein the housing encloses all or part of the at least one spring.

4. The head worn computer of any previous claim, wherein the head worn computer is arranged to be flipped 180° on the user's head.

5. The head worn computer of any previous claim, further comprising: a central processing printed circuit board, CPUPCB, (601) including a central processing unit, CPU, (603) operatively coupled to a first near field communications, NFC, module (605), the first NFC module (605) being located in a first one of the plurality of regions (314); and an auxiliary printed circuit board, AUXPCB, (611) including one or more auxiliary modules (613) operatively coupled to a second NFC module (605), the second NFC module (605) being located in a second one of the plurality of regions (315); wherein the first and second NFC modules (605) are configured to establish an NFC link.

6. The head worn computer of any previous claim , further comprising at least one mount (504), the at least one mount (504) being attached to one of the end regions (301, 302) of the housing.

7. The head worn computer of claim 6, wherein the at least one mount (504) is configured to mount an accessory.

8. The head worn computer of claim 7, wherein the accessory includes at least one of a camera, a sensor, a microphone, a display, and an illumination device.

9. The head worn computer of claim 8, wherein the at least one mount includes at least one joint.

10. The head worn computer of any of claims 5 or 6 to 9 when dependent on claim 5, wherein said first one of the plurality of regions (314) and said second one of the plurality of regions (315) are adjacent.

11. A method of configuring a head worn computer for a user, the method comprising:
providing a housing, wherein the housing includes a plurality of regions and further two end regions; and
wherein the head worn computer is configured to wrap around a portion of the user's head, such that the two end regions (301, 302) are located at the front of the user's head, the two end regions (301, 302) being on opposite sides of the user's head;
wherein:
the housing includes at least one spring (401) configured to apply an inward force to the user's head; and
the plurality of regions includes a first flexible region (305, 306) and a second flexible region (303, 304);
wherein the first flexible region (305, 306) is located between a center of the housing and a first stiff region (307, 308), said center of the housing (313) being located at the back of the user's head when the head worn computer is worn;
wherein the second flexible region (303, 304) is located between the first stiff region (307, 308) and a second stiff region (311, 312), wherein the first stiff region (307, 308) and the second stiff region (311, 312) are on a same side of the user's head; and
wherein the first flexible region (305, 306) is closer to the center of the housing (313) than the second flexible region (303, 304) and as a result is arranged to provide a greater inward force to the user's head than the second flexible region (303, 304);
wherein the housing is supported by the back of the user's head when the head worn computer is worn.

12. The method of claim 11, further comprising:
operatively coupling a central processing printed circuit board, CPUPCB, (601) including a central processing unit, CPU, (603) to a first near field communications, NFC, module (605), the first NFC module (605) being in a first one of the plurality of regions (314); and
operatively coupling an auxiliary printed circuit board, AUXPCB, (611) including one or more auxiliary modules (613) to a second NFC module (605), the second NFC module (605) being in a second one of the plurality of regions (315);
wherein the first and second NFC modules (605) are configured to establish an NFC link.

13. The method of claim 12, wherein the first one of the plurality of regions (314) and the second one of the plurality of regions are adjacent (315).

## Patentansprüche

1. Am Kopf getragener Computer, umfassend:
ein Gehäuse, wobei das Gehäuse (313) umfasst:
eine Mehrzahl von Bereichen und ferner zwei Endbereiche (301, 302);
wobei der am Kopf getragene Computer so konfiguriert ist, dass er derart um einen Abschnitt des Kopfes des Benutzers herum aufgesetzt wird, dass die zwei Endbereiche (301, 302) sich an der Vorderseite des Kopfes des Benutzers befinden und die zwei Endbereiche (301, 302) auf gegenüberliegenden Seiten des Kopfes des Benutzers sind;
wobei
das Gehäuse mindestens eine Feder (401) zum Anwenden einer nach innen gerichteten Kraft auf den Kopf des Benutzers umfasst;
und
die Mehrzahl von Bereichen einen ersten flexiblen Bereich (305, 306) und einen zweiten flexiblen Bereich (303, 304) umfasst;
wobei der erste flexible Bereich (305, 306) sich zwischen einer Mitte des Gehäuses und einem ersten steifen Bereich (307, 308) befindet, wobei die Mitte des Gehäuses (313) sich am Hinterkopf des Benutzers befindet, wenn der am Kopf getragene Computer getragen wird;
wobei der zweite flexible Bereich (303, 304) sich zwischen dem ersten steifen Bereich (307, 308) und einem zweiten steifen Bereich (311, 312), befindet, wobei der erste steife Bereich (307, 308) und der zweite steife Bereich (311, 312) auf einer gleichen Seite des Kopfes des Benutzers sind; und
wobei der erste flexible Bereich (305, 306) näher zur Mitte des Gehäuses (313) als der zweite flexible Bereich (303, 304) ist und folglich so konfiguriert ist, dass er eine größere nach innen gerichtete Kraft auf den Kopf des Benutzers als der zweite flexible Bereich (303, 304) bereitstellt,
wobei das Gehäuse durch den Hinterkopf des Benutzers gehalten wird, wenn der am Kopf getragene Computer getragen wird.

2. Am Kopf getragener Computer nach Anspruch 1, wobei die Endbereiche (301, 302) so konfiguriert sind, dass sie über den Ohren des Benutzers anliegen.

3. Am Kopf getragener Computer nach einem der vorhergehenden Ansprüche, wobei das Gehäuse die Gesamtheit oder einen Teil der mindestens einen Feder umschließt.

4. Am Kopf getragener Computer nach einem der vorhergehenden Ansprüche, wobei der am Kopf getragene Computer konfiguriert ist, um auf dem Kopf des Benutzers um 180° gedreht zu werden.

5. Am Kopf getragener Computer nach einem der vorhergehenden Ansprüche, ferner umfassend: eine gedruckte Leiterplatte zur zentralen Verarbeitung, CPUPCB, (601), die eine zentrale Verarbeitungseinheit, CPU, (603) umfasst, die mit einem ersten Nahfeldkommunikations, NFC,-Modul (605) funktionell gekoppelt ist, wobei das erste NFC-Modul (605) sich in einem ersten der Mehrzahl von Bereichen (314) befindet; und
eine gedruckte Hilfsleiterplatte, AUXPCB, (611), die ein oder mehrere Hilfsmodule (613) umfasst, die mit einem zweiten NFC-Modul (605) funktionell gekoppelt sind, wobei das zweite NFC-Modul (605) sich in einem zweiten der Mehrzahl von Bereichen (315) befindet; wobei das erste und das zweite NFC-Modul (605) zum Herstellen einer NFC-Verbindung konfiguriert sind.

6. Am Kopf getragener Computer nach einem der vorhergehenden Ansprüche, ferner umfassend mindestens eine Halterung (504), wobei die mindestens eine Halterung (504) an einem der Endbereiche (301, 302) des Gehäuses angebracht ist.

7. Am Kopf getragener Computer nach Anspruch 6, wobei die mindestens eine Halterung (504) zum Befestigen eines Zubehörs konfiguriert ist.

8. Am Kopf getragener Computer nach Anspruch 7, wobei das Zubehör mindestens eines von einer Kamera, einem Sensor, einem Mikrofon, einer Anzeige und einer Beleuchtungseinrichtung umfasst.

9. Am Kopf getragener Computer nach Anspruch 8, wobei die mindestens eine Halterung mindestens ein Gelenk umfasst.

10. Am Kopf getragener Computer nach einem der Ansprüche 5 oder 6 bis 9, wenn von Anspruch 5 abhängig, wobei der erste der Mehrzahl von Bereichen (314) und der zweite der Mehrzahl von Bereichen (315) benachbart sind.

11. Verfahren zum Konfigurieren eines am Kopf getragenen Computers für einen Benutzer, wobei das Verfahren umfasst:
Bereitstellen eines Gehäuses, wobei das Gehäuse eine Mehrzahl von Bereichen und ferner zwei Endbereiche umfasst; und
wobei der am Kopf getragene Computer so konfiguriert ist, dass er derart um einen Abschnitt des Kopfes des Benutzers herum aufgesetzt wird, dass die zwei Endbereiche (301, 302) sich an der Vorderseite des Kopfes des Benutzers befinden, wobei die zwei Endbereiche (301, 302) auf gegenüberliegenden Seiten des Kopfes des Benutzers sind;
wobei:
das Gehäuse mindestens eine Feder (401) umfasst, die zum Anwenden einer nach innen gerichteten Kraft auf den Kopf des Benutzers konfiguriert ist; und
die Mehrzahl von Bereichen einen ersten flexiblen Bereich (305, 306) und einen zweiten flexiblen Bereich (303, 304) umfasst;
wobei der erste flexible Bereich (305, 306) sich zwischen einer Mitte des Gehäuses und einem ersten steifen Bereich (307, 308) befindet, wobei die Mitte des Gehäuses (313) sich am Hinterkopf des Benutzers befindet, wenn der am Kopf getragene Computer getragen wird;
wobei der zweite flexible Bereich (303, 304) sich zwischen dem ersten steifen Bereich (307, 308) und einem zweiten steifen Bereich (311, 312), befindet, wobei der erste steife Bereich (307, 308) und der zweite steife Bereich (311, 312) auf einer gleichen Seite des Kopfes des Benutzers sind; und
wobei der erste flexible Bereich (305, 306) näher zur Mitte des Gehäuses (313) als er zweite flexible Bereich (303, 304) ist und folglich so konfiguriert ist, dass er eine größere nach innen gerichtete Kraft auf den Kopf des Benutzers als der zweite flexible Bereich (303, 304) bereitstellt,
wobei das Gehäuse durch den Hinterkopf des Benutzers gehalten wird, wenn der am Kopf getragene Computer getragen wird.

12. Verfahren nach Anspruch 11, ferner umfassend:
funktionelles Koppeln einer gedruckten Leiterplatte zur zentralen Verarbeitung, CPUPCB, (601), die eine zentrale Verarbeitungseinheit, CPU, (603) umfasst, mit einem ersten Nahfeldkommunikations, NFC,-Modul (605), wobei das erste NFC-Modul (605) in einem ersten der Mehrzahl von Bereichen (314) ist; und
funktionelles Koppeln einer gedruckten Hilfsleiterplatte, AUXPCB, (611), die ein oder mehrere Hilfsmodule (613) umfasst, mit einem zweiten NFC-Modul (605), wobei das zweite NFC-Modul (605) in einem zweiten der Mehrzahl von Bereichen (315) ist;
wobei das erste und das zweite NFC-Modul (605) zum Herstellen einer NFC-Verbindung konfiguriert sind.

13. Verfahren nach Anspruch 12, wobei der erste der Mehrzahl von Bereichen (314) und der zweite der Mehrzahl von Bereichen (315) benachbart sind.

## Revendications

1. Ordinateur porté sur la tête, comprenant:
un boîtier, dans lequel le boîtier (313) comprend une pluralité de régions ainsi que deux régions d'extrémité supplémentaires (301, 302);
dans lequel l'ordinateur porté sur la tête est configuré de manière à s'enrouler autour d'une partie de la tête de l'utilisateur, de telle sorte que les deux régions d'extrémité (301, 302) soient situées à l'avant de la tête de l'utilisateur, et que les deux régions d'extrémité (301, 302) soient situées sur des côtés opposés de la tête de l'utilisateur;
dans lequel le boîtier comprend au moins un ressort (401) configuré de manière à appliquer une force orientée vers l'intérieur à la tête de l'utilisateur; et
la pluralité de régions comprend une première région souple (305, 306) et une seconde région souple (303, 304);
dans lequel la première région souple (305, 306) est située entre un centre du boîtier et une première région rigide (307, 308), ledit centre du boîtier (313) étant situé à l'arrière de la tête de l'utilisateur lorsque l'ordinateur porté sur la tête est porté;
dans lequel la seconde région souple (303, 304) est située entre la première région rigide (307, 308) et une seconde région rigide (311, 312), dans lequel la première région rigide (307, 308) et la seconde région rigide (311, 312) sont situées sur un même côté de la tête de l'utilisateur; et
dans lequel la première région souple (305, 306) est plus proche du centre du boîtier (313) que la seconde région souple (303, 304), et est par conséquent agencée de manière à appliquer une plus grande force orientée vers l'intérieur à la tête de l'utilisateur que la seconde région souple (303, 304),
dans lequel le boîtier est supporté par l'arrière de la tête de l'utilisateur lorsque l'ordinateur porté sur la tête est porté.

2. Ordinateur porté sur la tête selon la revendication 1, dans lequel les régions d'extrémité (301, 302) sont agencées de manière à reposer au-dessus des oreilles de l'utilisateur.

3. Ordinateur porté sur la tête selon l'une quelconque des revendications précédentes, dans lequel le boîtier renferme la totalité ou une partie dudit au moins un ressort.

4. Ordinateur porté sur la tête selon l'une quelconque des revendications précédentes, dans lequel l'ordinateur porté sur la tête est agencé de manière à être basculé de 180° sur la tête de l'utilisateur.

5. Ordinateur porté sur la tête selon l'une quelconque des revendications précédentes, comprenant en outre:
une carte de circuit imprimé de traitement central, CPUCPB, (601) comprenant une unité centrale de traitement, CPU, (603) couplée de façon opérationnelle à un premier module de communication en champ proche, NFC, (605), le premier module NFC (605) étant situé dans une première région (314) de la pluralité de régions; et
une carte de circuit imprimé auxiliaire, AUXPCB, (611) comprenant un ou plusieurs module(s) auxiliaires(s) couplé(s) de façon opérationnelle à un second module NFC (605), le second module NFC (605) étant situé dans une deuxième région (315) de la pluralité de régions;
dans lequel les premier et second modules NFC (605) sont configurés de manière à établir une liaison NFC.

6. Ordinateur porté sur la tête selon l'une quelconque des revendications précédentes, comprenant en outre au moins une monture (504), ladite au moins une monture (504) étant attachée à l'une des régions d'extrémité (301, 302) du boîtier.

7. Ordinateur porté sur la tête selon la revendication 6, dans lequel ladite au moins une monture (504) est configurée pour le montage d'un accessoire.

8. Ordinateur porté sur la tête selon la revendication 7, dans lequel l'accessoire comprend au moins une caméra, un capteur, un microphone, un écran d'affichage et un dispositif d'éclairage.

9. Ordinateur porté sur la tête selon la revendication 8, dans lequel ladite au moins une monture comprend au moins une articulation.

10. Ordinateur porté sur la tête selon l'une quelconque des revendications 5 ou 6 à 9 lorsqu'elles dépendent de la revendication 5, dans lequel ladite première région (314) de la pluralité de régions et ladite deuxième région (315) de la pluralité de régions sont adjacentes.

11. Procédé pour configurer d'un ordinateur porté sur la tête pour un utilisateur, le procédé comprenant les étapes suivantes:
fournir un boîtier, dans lequel le boîtier comprend une pluralité de régions ainsi que deux régions d'extrémité supplémentaires; et
dans lequel l'ordinateur porté sur la tête est configuré de manière à s'enrouler autour d'une partie de la tête de l'utilisateur, de telle sorte que les deux régions d'extrémité (301, 302) soient situées à l'avant de la tête de l'utilisateur, les deux régions d'extrémité (301, 302) étant situées sur des côtés opposés de la tête de l'utilisateur;
dans lequel:
le boîtier comprend au moins un ressort (401) configuré de manière à appliquer une force orientée vers l'intérieur à la tête de l'utilisateur; et
la pluralité de régions comprend une première région souple (305, 306) et une seconde région souple (303, 304);
dans lequel la première région souple (305, 306) est située entre un centre du boîtier et une première région rigide (307, 308), ledit centre du boîtier (313) étant situé à l'arrière de la tête de l'utilisateur lorsque l'ordinateur porté sur la tête est porté;
dans lequel la seconde région souple (303, 304) est située entre la première région rigide (307, 308) et une seconde région rigide (311, 312), dans lequel la première région rigide (307, 308) et la seconde région rigide (311, 312) sont situées sur un même côté de la tête de l'utilisateur; et
dans lequel la première région souple (305, 306) est plus proche du centre du boîtier (313) que la seconde région souple (303, 304), et est par conséquent agencée de manière à appliquer une plus grande force orientée vers l'intérieur à la tête de l'utilisateur que la seconde région souple (303, 304),
dans lequel le boîtier est supporté par l'arrière de la tête de l'utilisateur lorsque l'ordinateur porté sur la tête est porté.

12. Procédé selon la revendication 11, comprenant en outre les étapes suivantes:
coupler de façon opérationnelle une carte de circuit imprimé de traitement central, CPUCPB, (601) comprenant une unité centrale de traitement, CPU, (603) à un premier module de communication en champ proche, NFC, (605), le premier module NFC (605) étant situé dans une première région (314) de la pluralité de régions; et
coupler de façon opérationnelle une carte de circuit imprimé auxiliaire, AUXPCB, (611) comprenant un ou plusieurs module(s) auxiliaires(s) couplé(s) de façon opérationnelle à un second module NFC (605), le second module NFC (605) étant situé dans une deuxième région (315) de la pluralité de régions;
dans lequel les premier et second modules NFC (605) sont configurés de manière à établir une liaison NFC.

13. Procédé selon la revendication 12, dans lequel la première région (314) de la pluralité de régions et la deuxième région (315) de la pluralité de régions sont adjacentes.
